# EUROPÄISCHE PATENTANMELDUNG

(11) **EP 4 786 206 A1**
(43) Veröffentlichungstag der Anmeldung: **05.08.2026**
(21) Anmeldenummer: 26151533.2
(22) Anmeldetag: 13.01.2026
(51) Int. Cl.: B60C 1/00, C08K 3/04, C08K 3/36

(54) **SCHWEFELVERNETZBARE GUMMIERUNGSMISCHUNG UND FAHRZEUGLUFTREIFEN**

(30) Priorität: 23.01.2025 DE 102025102352
(71) Anmelder: Continental Reifen Deutschland GmbH, 30175 Hannover (DE)
(72) Erfinder: Dr. Fleck, Frank, 30175 Hannover (DE); Dr. Hengesbach, Frank, 30175 Hannover (DE)
(74) Vertreter: Continental Corporation

(57) **Zusammenfassung**

Die Erfindung betrifft eine schwefelvernetzbare Gummierungsmischung für metallische Festigkeitsträger, insbesondere in Fahrzeugreifen, enthaltend wenigstens folgende Bestandteile:
- 70 bis 100 phr (Gewichtsteile, bezogen auf 100 Gewichtsteile der gesamten Kautschuke in der Mischung) Naturkautschuk und/oder synthetisches Polyisopren,
- bis zu 30 phr zumindest eines Polybutadiens,
- mehr als 50 phr zumindest eines Füllstoffes, ausgewählt aus der Gruppe bestehend aus Kieselsäuren und Rußen,
- zumindest ein Silankupplungsagens und
- zumindest ein Haftsystem für metallische Festigkeitsträger,
dadurch gekennzeichnet, dass sie
- 10 bis 50 phr zumindest eines Rußes und
- 10 bis 50 phr zumindest einer Kieselsäure aufweist.

## Beschreibung

Die Erfindung betrifft eine schwefelvernetzbare Gummierungsmischung für metallische Festigkeitsträger, insbesondere in Fahrzeugreifen, enthaltend wenigstens folgende Bestandteile:
- 70 bis 100 phr (Gewichtsteile, bezogen auf 100 Gewichtsteile der gesamten Kautschuke in der Mischung) Naturkautschuk und/oder synthetisches Polyisopren,
- bis zu 30 phr zumindest eines Polybutadiens,
- mehr als 50 phr zumindest eines Füllstoffes, ausgewählt aus der Gruppe bestehend aus Kieselsäuren und Rußen,
- zumindest ein Silankupplungsagens und
- zumindest ein Haftsystem für metallische Festigkeitsträger.

Ferner betrifft die Erfindung einen Fahrzeugluftreifen, der eine mit Schwefel vernetzte Gummierungsmischung aufweist.

In Fahrzeugreifen sind metallische Festigkeitsträger, heute in der Regel vermessingte Stahlcorde, ein wesentliches Verstärkungselement, um die mechanische Stabilität und Robustheit der Reifen sicherzustellen. Da der Modul dieser metallischen Festigkeitsträger viel höher ist als der des umgebenden Gummimaterials, werden besonders hohe Anforderungen an die Gummierungsmischungen für die metallischen Festigkeitsträger gestellt. Eine wichtige Eigenschaft, die von einer Gummierungsmischung für metallische Festigkeitsträger gefordert wird, ist eine hohe Steifigkeit, um den Steifigkeitsgradienten vom metallischen Festigkeitsträger zum weiter entfernten Gummimaterial zu verringern. Außerdem muss die Gummierungsmischung eine ausreichende Haftung zum metallischen Festigkeitsträger aufweisen, die über die gesamte Lebensdauer des Reifens erhalten bleibt.

Bekannte Haftsysteme in Gummierungsmischungen insbesondere für vermessingte Stahlcorde sind z. B. solche, die auf Methylenakzeptor-Methylendonor-Paaren basieren. Bei dem sogenannten Direkthaftverfahren für vermessingten Stahlcord enthält die Gummierungsmischung beispielsweise Cobaltsalze und ein Resorcin(Methylenakzeptor)-Formaldehyd(Methylendonor)-Kieselsäuresystem, wobei das Formaldehyd in der Regel Formaldehydspendern wie veretherten Melaminharzen entstammt. Zu den veretherten Melaminharzen zählen beispielsweise Hexamethoxymethylmelamin (HMMM) und Hexamethylentetramin (HMT). Geeignete Methylenakzeptoren sind z. B. Resorcin und Resorcin-Äquivalente oder Vorkondensate davon und andere Phenole. Während des Vulkanisationsprozesses wird aus dem Methylendonor und dem Methylenakzeptor ein Harz gebildet. Zusätzlich bildet also sich neben dem Schwefelnetzwerk in der der mit Schwefel vernetzenden Gummierungsmischung ein zweites Netzwerk basierend auf Methylendonor und Methylenakzeptor aus, welches mit der Oberfläche der vermessingten Stahlcorde interagiert.

Um die Haftung zum metallischen Festigkeitsträger weiter zu verbessern, ist es auch möglich, spezielle Verstärkungsharze, wie z. B. spezielle Novolak-Harze, die z. B. aus der EP 2 432 810 B1 bekannt sind, einzusetzen. Es ist auch von Vorteil, wenn diese Gummierungsmischungen größere Mengen an Schwefel und geringere Mengen an Vulkanisationsbeschleuniger aufweisen, damit eine verbesserte mechanische Verzahnung mit der Festigkeitsträgeroberfläche erfolgen kann. Gummierungsmischungen, die spezielle Novolak-Harze enthalten, für metallische Festigkeitsträger in Fahrzeugreifen sind beispielsweise aus der EP 4 126 560 A1 und der EP 4 126 561 A1 bekannt. Auch in Kombination mit speziellen Vulkanisationsbeschleunigern ist die Verwendung von speziellen Verstärkungsharzen in Gummierungsmischungen für metallische Festigkeitsträger z. B. aus der WO 2023/030592 A1 bekannt.

In der Regel enthalten Gummierungsmischungen für metallische Festigkeitsträger eine Art eines Füllstoffes. So enthalten sie beispielsweise entweder nur einen Ruß mit niedriger Struktur (z. B. N326) oder nur eine Kieselsäure in Kombination mit zumindest einem Silankupplungsagens.

Es sind auch Gummierungsmischungen für metallische und/oder textile Festigkeitsträger bekannt, die sowohl Ruß als auch Kieselsäure als Füllstoff aufweisen. Derartige Mischungen sind z. B. aus der JP 5253915 B2, der WO 2016/176080 A1, WO 2010/133622 A1 und der EP 1 685 980 A1 bekannt, wobei z. T. auch Gesamtfüllstoffgehalte von mehr als 50 phr offenbart sind. Allerdings weisen solche Mischungen nicht in allen Fällen das gewünschte ausgeglichene Verhältnis zwischen Steifigkeit und Rissbeständigkeit auf der einen Seite und geringer Energiedissipation, korrelierend mit einem niedrigen Rollwiderstand bei Verwendung im Reifen, auf der anderen Seite auf.

Der vorliegenden Erfindung liegt daher die Aufgabe zugrunde, eine Gummierungsmischung für metallische Festigkeitsträger bereitzustellen, die im Vergleich zum Stand der Technik eine Verbesserung im Eigenschaftsprofil Steifigkeit/Rissbeständigkeit und Energiedissipation aufweist.

Gelöst wird diese Aufgabe durch eine Gummierungsmischung der eingangs genannten Art, die
- 10 bis 50 phr zumindest eines Rußes und
- 10 bis 50 phr zumindest einer Kieselsäure aufweist.

Durch die Verwendung einer Mischung aus Ruß und Kieselsäure in den angegebenen Mengen wurde überraschenderweise festgestellt, dass das Gleichgewicht zwischen Steifigkeit/Risseigenschaften und der Energiedissipation verbessert werden kann. Insbesondere zeigen derartige Mischungen eine Verbesserung in der Energiedissipation und damit einhergehend dem Rollwiderstand, wobei die Steifigkeit bzw. Rissbeständigkeit auf gleichem Niveau verbleibt.

Damit ergeben sich neue Möglichkeiten in den Rezepturen von Mischungen, je nachdem auf welche Eigenschaften das Hauptaugenmerk gerichtet werden soll.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Die Gummierungsmischung enthält 70 bis 100 phr Naturkautschuk (NR) und/oder synthetisches Polyisopren (IR). Naturkautschuk und synthetisches Polyisopren können auch im Gemisch eingesetzt werden.

Für besonders gute Eigenschaften im Hinblick auf die Haftung und Haltbarkeit enthält die Gummierungsmischung vorzugsweise 70 bis 100 phr Naturkautschuk. Bei Naturkautschuk handelt es sich um auf biochemischem Wege in Pflanzen synthetisiertes Polyisopren mit einem cis-1,4-Gehalt von mehr als 99 %. Natürliches Polyisopren wird demnach verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Als weiteren Kautschuk kann die Gummierungsmischung bis zu 30 phr, vorzugsweise 15 bis 25 phr, zumindest eines Polybutadiens (BR) enthalten. Für besonders gute Haftungseigenschaften und eine gutes Verarbeitungsverhalten ist das Polybutadien eines mit einem cis-Gehalt von mehr als 95 Gew.-% oder ein funktionalisiertes Li-Polybutadien, z. B. BR1250 H von der Firma Nippon Zeon oder solche funktionalisierten Polybutadiene, wie sie in der EP 2 289 990 A1 beschrieben sind.

Die erfindungsgemäße Gummierungsmischung enthält mehr als 50 phr, bevorzugt 55 bis 90 phr, besonders bevorzugt 55 bis 75 phr, zumindest eines Füllstoffes, ausgewählt aus der Gruppe bestehend aus Kieselsäuren und Rußen, wobei sich die Gesamtmenge an Ruß und Kieselsäure zusammensetzt aus 10 bis 50 phr zumindest eines Rußes und 10 bis 50 phr zumindest einer Kieselsäure. Für besonders gute Steifigkeit bei niedrigem Rollwiderstand setzt sich die Gesamtmenge an Ruß und Kieselsäure vorzugsweise aus 10 bis 40 phr zumindest eines Rußes und 10 bis 40 phr zumindest einer Kieselsäure zusammen.

Die erfindungsgemäße Gummierungsmischung enthält 10 bis 50 phr zumindest eines Rußes. Als Ruß-Typen kommen solche in Frage, die für Gummierungsmischungen üblich sind, beispielsweise Ruß des Typs N 326. Es können auch mehrere Ruße im Gemisch eingesetzt werden, z. B. ein Gemisch aus N121 und N550.

Gemäß einer bevorzugten Weiterbildung der Erfindung weist bzw. weisen der Ruß bzw. die Ruße eine Öladsorptionszahl OAN (gemäß ASTM D2414) von 50 bis 200 mL/100 g, vorzugsweise von 70 bis 175 mL/100 g, und eine BET-Oberfläche (gemäß ASTM D6556) von 60 bis 100 m²/g, vorzugsweise 75 bis 90 m²/g, auf.

Die erfindungsgemäße Gummierungsmischung enthält 10 bis 50 phr zumindest einer Kieselsäure. Es können unterschiedliche Kieselsäuren auch im Gemisch zum Einsatz kommen, z. B. Gemische aus hoch-oberflächigen Kieselsäuren im Gemisch mit niedrig-oberflächlichen Kieselsäuren.

Vorzugsweise wird für eine Mischung mit besonderes guter Energiedissipation eine Kieselsäure eingesetzt, die eine CTAB-Oberfläche (gemäß ASTM D 3765) von 80 bis 250 m²/g, vorzugsweise von 140 bis 190 m²/g, aufweist.

Bevorzugt ist aus Umweltgesichtspunkten, wenn es sich bei Ruß und Kieselsäure um Füllstoffe aus nachhaltigen Quellen handelt. Beispielsweise können recycelter Ruß oder Kieselsäure aus Reisschalen-Asche eingesetzt werden.

Gemäß einer im Hinblick auf die Nachhaltigkeit vorteilhafte Ausgestaltung der Erfindung ist die Kieselsäure zu mindestens 33 %, bevorzugt zu mindestens 50 %, besonders bevorzugt zu mindestens 75 %, jeweils bezogen auf das Gesamtgewicht der in der schwefelvernetzbaren Gummierungsmischung enthaltenen Kieselsäure, aus Reisschalen-Asche hergestellt ("rice husk ash silica" (RHAS))

Die Gummierungsmischung kann neben Ruß und Kieselsäure auch noch weitere Füllstoffe enthalten, wie HTC-Kohle, Alumosilicate, Kreide, Stärke, Magnesiumoxid, Titandioxid oder Kautschukgele sowie Fasern.

Zur Verbesserung der Verarbeitbarkeit und zur Anbindung der Kieselsäure und anderer ggf. vorhandener polarer Füllstoffe an den Kautschuk werden Silan-Kupplungsagenzien in der Gummierungsmischung eingesetzt. Die Silan-Kupplungsagenzien reagieren mit den oberflächlichen Silanolgruppen der Kieselsäure während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, - NH₂ oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Evonik Industries) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive Performance Materials, USA, oder solche, die unter dem Namen VP Si 363 von der Firma Evonik Industries vertrieben werden.

Die erfindungsgemäße Gummierungsmischung enthält zumindest ein Haftsystem für metallische Festigkeitsträger. Vorzugsweise basiert das Haftsystem auf organischen Cobaltsalzen und Verstärkerharzen und mehr als 2,5 phr Schwefel. Dies zeigt eine besonders gute Haftung zu metallischen Festigkeitsträgern, insbesondere vermessingten Stahlcorden, und verhindert dadurch eine Korrosion an den Festigkeitsträgern.

Enthält die erfindungsgemäße Gummierungsmischung zumindest ein organisches Cobaltsalz, kann es sich beispielsweise um Cobaltstearat, -borat, -boratalkanoate, -naphthenat, -rhodinat, -octoat, -adipat usw. handeln. Es können auch mehrere Cobaltsalze im Gemisch eingesetzt werden.

Vorzugsweise enthält die Gummierungsmischung 0,2 bis 2 phr, besonders bevorzugt 0,2 bis 1,5 phr, eines organischen Cobaltsalzes.

Enthält die Gummierungsmischung Verstärkerharze, kann es sich dabei um unterschiedlichste Harze wie Phenol-Formaldehydharze mit Härter oder Resorcin/Resorcinvorkondensat-Formaldehydsysteme handeln.

Gemäß einer bevorzugten Weiterbildung der Erfindung enthält die Gummierungsmischung als Verstärkerharz zumindest ein Novolak-Harz, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist. Hierdurch werden Vorteile in der Zugfestigkeit und der Bruchdehnung erreicht.

Das Novolak-Harz ist durch Reaktion von einer Phenolverbindung mit einem Aldehyd und einem Carbamat-Harz hergestellt. Die Phenolverbindung kann dabei ausgewählt sein aus der Gruppe bestehend aus Phenol, o-, m- und p-Kresol und o-, m- und p-Monoalkylphenolen mit Alkylresten mit bis zu 18 Kohlenstoffatomen.

Vorzugsweise ist die Phenolverbindung Phenol. Das Aldehyd kann ausgewählt sein aus der Gruppe bestehend aus Formaldehyd, Acetaldehyd, Propionaldehyd, Butyraldehyd und Isobutyraldehyd. Vorzugsweise ist das Aldehyd Formaldehyd.

Das Carbamat-Harz ist durch Reaktion von Alkylurethan mit einem Aldehyd hergestellt. Das Alkylurethan kann dabei ausgewählt sein aus der Gruppe bestehend aus Ethylurethan, Butylurethan, 2-Ethylhexylurethan und Decylurethan. Vorzugsweise ist das Alkyluethan Butylurethan.

Das Aldehyd für das Carbamat-Harz kann ausgewählt sein aus der Gruppe bestehend aus Formaldehyd, Acetaldehyd, Propionaldehyd, Butyraldehyd und Isobutyraldehyd. Vorzugsweise ist das Aldehyd Formaldehyd.

Bei den Aldehyden für das Novolak-Harz und das Carbamat-Harz kann es sich um gleiche oder unterschiedliche Aldehyde handeln.

Für die Gummierungsmischung wird bevorzugt ein Novolak-Harz eingesetzt, welches aus Phenol, Formaldehyd und einen Carbamat-Harz aus Butylurethan und Formaldehyd hergestellt ist (butylcarbamat-funktionalisiertes Phenol-Formaldehyharz). Beispielsweise kann Alnovol PN 760 von der Firma Allnex eingesetzt werden.

Ist die Gummierungsmischung gemäß einer vorteilhaften Weiterbildung frei von Resorcin als Haftungssubstanz, so sind die Mischungen außerdem umweltfreundlicher und weniger gesundheitsgefährdend bei der Verarbeitung.

Vorzugsweise enthält die Gummierungsmischung zumindest ein verethertes Melaminharz, welches ein sekundäres Netzwerk für gute Haftung und Härte aufbaut.

Für ein optimales Verhältnis von Haftung und Rissbeständigkeit enthält die Gummierungsmischung 0,25 bis 5 phr, bevorzugt 0,25 bis 4 phr, besonders bevorzugt 0,25 bis 3,5 phr, zumindest eines Verstärkerharzes als Methylenakzeptor und 0,25 bis 5 phr, bevorzugt 1,2 bis 3,5 phr, zumindest eines veretherten Melaminharzes als Methylendonor enthält.

Vorzugsweise ist das veretherte Melaminharz Hexamethoxymethylmelamin (HMMM). Dies ist ein übliches, auf dem Markt erhältliches Melaminharz, das ein gutes Harznetzwerk ausbildet. HMMM wird beispielsweise als technisches Produkt - oft auf einem inerten Träger - mit einem Methylierungsgrad < 6 eingesetzt.

Des Weiteren kann die erfindungsgemäße Gummierungsmischung übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Zinkseifen, Wachse, Klebharze, wie z. B. Kohlenwasserstoffharze und Kolophonium, und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr, vorzugsweise mehr als 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenimidbeschleuniger wie z.B. N-tert-Butyl-2-Benzothiazolsulfenimid (TBSI), Sulfenamidbeschleuniger wie z. B. Benzothiazyl-2-cyclohexylsulfenamid (CBS), Benzothiazyl-2-tert.-butylsulfenamid (TBBS) und Benzothiazyl-2-dicyclohexylsulfenamid (DCBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.

Auch weitere netzwerkbildende Systeme, wie z. B. Vulkuren^{®}, Duralink^{®}, Perkalink^{®} oder Systeme, wie sie in der WO 2010/049261 A2 beschrieben sind, können in der Gummierungsmischung eingesetzt werden.

Die Vulkanisationsbeschleuniger können in üblichen Mengen eingesetzt werden. Gemäß einer vorteilhaften Weiterbildung der Erfindung enthält die Gummierungsmischung als Vulkanisationsbeschleuniger 0,25 bis 3 phr zumindest eines Sulfenimid- und/oder eines Sulfenamidbeschleunigers. Als Sulfenimidbeschleuniger wird vorzugsweise N-tert-Butyl-2-Benzothiazolsulfenimid (TBSI) und als Sulfenamidbeschleuniger vorzugsweise Benzothiazyl-2-dicyclohexylsulfenamid (DCBS) eingesetzt. Mit TBSI und/oder DCBS als Vulkanisationsbeschleuniger kann eine weitere Verbesserung hinsichtlich der Haftung erzielt werden.

Enthält die Gummierungsmischung 0,25 bis 3 phr zumindest eines Sulfenamidbeschleunigers, weist sie vorzugsweise weniger als 0,5 phr andere Vulkanisationsbeschleuniger auf.

Außerdem kann die Kautschukmischung Vulkanisationsverzögerer enthalten.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung kann in unterschiedlichsten Gummiprodukten, in denen metallische Festigkeitsträger vorhanden sind, eingesetzt werden. Bei diesen Gummiprodukten kann es sich z. B. um Antriebsriemen, Fördergurte, Schläuche, gummierte Gewebe oder Luftfedern handeln. Unter diesen Produkten wird die Gummierungsmischung bevorzugt in Fördergurten eingesetzt.

Vorzugsweise wird die Gummierungsmischung in Fahrzeugluftreifen eingesetzt.

Die Gummierungsmischung kann dabei zur Gummierung unterschiedlichster Reifenbauteile, wie dem Wulstkern, den Wulstabdeckungen, den Wulstverstärkern, dem Gürtel, der Karkasse oder den Gürtelbandagen, eingesetzt werden, aber auch für andere festigkeitsträgernahe Mischungen wie Kernreiter, Squeegee, Gürtelkantenpolster, Schulterpolster, Laufstreifenunterplatten oder andere Bodymischungen kann die Kautschukmischung verwendet werden, wobei auch mehrere Bauteile innerhalb eines Reifens mit der erfindungsgemäßen Mischung versehen werden können. Die Herstellung der erfindungsgemäßen Fahrzeugluftreifen erfolgt dabei nach dem Fachmann bekannten Verfahren.

Vorzugsweise wird die Gummierungsmischung als Karkassgummierung eingesetzt, wo die Rissbeständigkeit der Gummierungsmischung zu einer hohen Lebensdauer des Fahrzeugluftreifens und die geringe Energiedissipation zu einem niedrigen Rollwiderstand führen.

Alternativ oder zusätzlich kann die Gummierungsmischung auch als Gürtelgummierungsmischung eingesetzt werden, was wiederum die Lebensdauer des Fahrzeugluftreifens positiv beeinflusst.

Besonders bevorzugt ist, wenn der Fahrzeugluftreifen ein Nutzfahrzeugreifen ist. Derartige Reifen weisen viele metallische Festigkeitsträger auf, für welche die erfindungsgemäße Gummierungsmischung vorteilhaft eingesetzt werden kann.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in der Tabelle 1 zusammengefasst sind, näher erläutert werden.

Die Vergleichsmischungen sind dabei mit V, die erfindungsgemäßen Mischungen sind mit E gekennzeichnet. Bei den Mischungen wurden die Mengen an Kieselsäure und Ruß variiert. Die Menge an Silankupplungsagens wurde an die Menge an Kieselsäure in der betreffenden Mischung angepasst.

Die Mischungsherstellung erfolgte unter üblichen Bedingungen unter Herstellung einer Grundmischung und anschließend der Fertigmischung in einem Labortangential mischer.

Aus den Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Rückprallelastizität bei 70 °C gemäß ISO 4662
- Spannungswert (Modul) bei 300 % Dehnung gemäß DIN 53504
- Zugfestigkeit bei Raumtemperatur gemäß DIN 53504
- Bruchdehnung bei Raumtemperatur gemäß DIN 53504
- Bruchenergiedichte bei Raumtemperatur bestimmt im Zugversuch, wobei die Bruchenergiedichte die bis zum Bruch erforderliche Arbeit, bezogen auf das Volumen der Probe, ist, gemäß DIN 53504

Die Rückprallelastizität bei 70 °C ist ein Maß für die Fähigkeit zur Energiedissipation. Ein höherer Wert bei 70 °C korreliert mit einem niedrigen Rollwiderstand bei Verwendung in Reifen. Der Spannungswert bei 300 % ist ein Maß für die Steifigkeit der Mischung.

Ferner wurden mit den Mischungen aus der Tabelle 1 Versuche zur Haftung an vermessingtem Stahlcord (2x0,3 HT) gemäß ASTM 2229/D1871 ohne Alterung vorgenommen (Vulkanisation: 20 min bei 160 °C, Einbettlänge in die Gummierungsmischung: 10 mm, Auszugsgeschwindigkeit: 125 mm/min). Es wurden die Herausziehkraft und die Bedeckung bestimmt. Bei der Herausziehkraft und der Bedeckung wurden die Werte der Mischung 1(V) als 100 % gesetzt; die Werte der anderen Mischungen wurden auf die Mischung 1(V) bezogen.

**Tabelle 1**

| **Bestandteile** | **Einheit** | **1(V)** | **2(E)** | **3(E)** | **4(E)** | **5(E)** | **6(E)** | **7(V)** |
|---|---|---|---|---|---|---|---|---|
| Naturkautschuk | phr | 100 | 100 | 100 | 100 | 100 | 100 | 100 |
| Ruß N339 | phr | - | 10 | 20 | 30 | 40 | 50 | 60 |
| Kieselsäure^{a)} | phr | 60 | 50 | 40 | 30 | 20 | 10 | 0 |
| Silankupplungsagens^{b)} | phr | 4,32 | 3,60 | 2,88 | 2,16 | 1,44 | 0,72 | - |
| Weichmacheröl | phr | 2 | 2 | 2 | 2 | 2 | 2 | 2 |
| Prozesshilfsmittel | phr | 4 | 4 | 4 | 4 | 4 | 4 | 4 |
| Alterungsschutzmittel | phr | 1,5 | 1,5 | 1,5 | 1,5 | 1,5 | 1,5 | 1,5 |
| Zinkoxid | phr | 8 | 8 | 8 | 8 | 8 | 8 | 8 |
| Cobaltstearat | phr | 1,3 | 1,3 | 1,3 | 1,3 | 1,3 | 1,3 | 1,3 |
| butylcarbamat-funktionalisiertes Phenol-Formaldehydharz^{c)} | phr | 2,5 | 2,5 | 2,5 | 2,5 | 2,5 | 2,5 | 2,5 |
| HMMM | phr | 2,5 | 2,5 | 2,5 | 2,5 | 2,5 | 2,5 | 2,5 |
| Beschleuniger DCBS | phr | 1,6 | 1,6 | 1,6 | 1,6 | 1,6 | 1,6 | 1,6 |
| Schwefel | phr | 6 | 6 | 6 | 6 | 6 | 6 | 6 |

| **Eigenschaften** | | | | | | | | |
|---|---|---|---|---|---|---|---|---|
| Rückprallelast. bei 70 °C | % | 51,7 | 52,5 | 53,4 | 54,0 | 54,2 | 52,9 | 52,2 |
| Spannungswert 300 % | MPa | 11,9 | 13,5 | 15,0 | 16,8 | 17,9 | 19,5 | 20,8 |
| Zugfestigkeit bei RT | MPa | 22,3 | 22,1 | 23,4 | 23,0 | 22,5 | 22,3 | 21,8 |
| Bruchdehnung | % | 530 | 483 | 471 | 431 | 402 | 372 | 343 |
| Bruchenergiedichte | J/cm³ | 49 | 44 | 46 | 42 | 38 | 35 | 32 |
| Herausziehkraft (ungealtert) | % | 100 | 100 | 103 | 98 | 91 | 81 | 81 |
| Bedeckung (ungealtert) | % | 100 | 114 | 116 | 117 | 118 | 117 | 117 |

| | | | | | | | | |
|---|---|---|---|---|---|---|---|---|
| ^{a)} Zeosil ^{®} 1165MP, Solvay, BET-Oberfläche = 165 m²/g (gemessen mit Stickstoff), CTAB-Oberfläche = 160 m²/g ^{b)} 3,3'-Bis(triethoxysilylpropyl)disulfid (TESPD) ^{c)} Alnovol ^{®} PN 760/Past, der Firma Allnex Netherlands B. V. | | | | | | | | |

Aus den Daten der Tabelle 1 wird ersichtlich, dass sich die erfindungsgemäßen Mischungen 2(E) bis 6(E) überraschenderweise durch eine erhöhte Rückprallelastizität bei 70 °C auszeichnen, was für den Fachmann bei Betrachtung der Werte für die Vergleichsmischungen 1(V) und 7(V) nicht zu erwarten war. Die erhöhte Rückprallelastizität ist mit einer verbesserten Energiedissipation und damit einem verringerten Rollwiderstand beim Einsatz in Reifen gleichzusetzen. Gleichzeitig werden unerwartet gute Steifigkeitswerte (Modul 300 %) erzielt, welche mit einer verbesserten Rissbeständigkeit und Haltbarkeit einhergehen. Ein besonders gutes Verhältnis von Steifigkeit und Energiedissipation wird mit den Mischungen 3(E) bis 5(E) erzielt.

Auch die Werte aus dem Zugversuch und für die Stahlcordhaftung verbleiben auf ähnlichem Niveau oder werden sogar verbessert.

## Patentansprüche

1. Schwefelvernetzbare Gummierungsmischung für metallische Festigkeitsträger, insbesondere in Fahrzeugreifen, enthaltend wenigstens folgende Bestandteile:
- 70 bis 100 phr (Gewichtsteile, bezogen auf 100 Gewichtsteile der gesamten Kautschuke in der Mischung) Naturkautschuk und/oder synthetisches Polyisopren,
- bis zu 30 phr zumindest eines Polybutadiens,
- mehr als 50 phr zumindest eines Füllstoffes, ausgewählt aus der Gruppe bestehend aus Kieselsäuren und Rußen,
- zumindest ein Silankupplungsagens und
- zumindest ein Haftsystem für metallische Festigkeitsträger,
**dadurch gekennzeichnet, dass** sie
- 10 bis 50 phr zumindest eines Rußes und
- 10 bis 50 phr zumindest einer Kieselsäure aufweist.

2. Schwefelvernetzbare Gummierungsmischung für metallische Festigkeitsträger nach Anspruch 1, **dadurch gekennzeichnet, dass** sie
- 10 bis 40 phr zumindest eines Rußes und
- 10 bis 40 phr zumindest einer Kieselsäure aufweist.

3. Schwefelvernetzbare Gummierungsmischung für metallische Festigkeitsträger nach Anspruch 1 oder 2, **dadurch gekennzeichnet, dass** die Kieselsäure(n) eine CTAB-Oberfläche (gemäß ASTM D 3765) von 80 bis 250 m²/g, vorzugsweise von 140 bis 190 m²/g, aufweist bzw. aufweisen.

4. Schwefelvernetzbare Gummierungsmischung für metallische Festigkeitsträger nach zumindest einem der vorhergehenden Ansprüche, **dadurch gekennzeichnet, dass** der Ruß bzw. die Ruße eine Öladsorptionszahl OAN (gemäß ASTM D2414) von 50 bis 200 mL/100 g, vorzugsweise von 70 bis 175 mL/100 g, und eine BET-Oberfläche (gemäß ASTM D6556) von 60 bis 100 m²/g, vorzugsweise 75 bis 90 m²/g aufweist bzw. aufweisen.

5. Schwefelvernetzbare Gummierungsmischung für metallische Festigkeitsträger nach zumindest einem der vorhergehenden Ansprüche, **dadurch gekennzeichnet, dass** das Haftsystem für metallische Festigkeitsträger auf organischen Cobaltsalzen und Verstärkerharzen und mehr als 2,5 phr Schwefel basiert.

6. Schwefelvernetzbare Gummierungsmischung für metallische Festigkeitsträger nach zumindest einem der Ansprüche 5, **dadurch gekennzeichnet, dass** sie 0,2 bis 2 phr des zumindest einen organischen Cobaltsalzes enthält.

7. Schwefelvernetzbare Gummierungsmischung für metallische Festigkeitsträger nach Anspruch 5 oder 6, **dadurch gekennzeichnet, dass** sie als Verstärkerharz zumindest ein Novolak-Harz, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, enthält.

8. Schwefelvernetzbare Gummierungsmischung für metallische Festigkeitsträger nach zumindest einem der vorhergehenden Ansprüche, **dadurch gekennzeichnet, dass** sie frei von Resorcin ist.

9. Schwefelvernetzbare Gummierungsmischung für metallische Festigkeitsträger nach zumindest einem der vorhergehenden Ansprüche, **dadurch gekennzeichnet, dass** das Haftsystem für metallische Festigkeitsträger zumindest ein verethertes Melaminharz enthält.

10. Schwefelvernetzbare Gummierungsmischung für metallische Festigkeitsträger nach Anspruch 9, **dadurch gekennzeichnet, dass** sie
- 0,25 bis 5 phr zumindest eines Verstärkerharzes als Methylenakzeptor und
- 0,25 bis 5 phr zumindest eines veretherten Melaminharzes als Methylendonor enthält.

11. Schwefelvernetzbare Gummierungsmischung für metallische Festigkeitsträger nach Anspruch 9 oder 10, **dadurch gekennzeichnet, dass** das veretherte Melaminharz Hexamethoxymethylmelamin (HMMM) ist.

12. Schwefelvernetzbare Gummierungsmischung für metallische Festigkeitsträger nach zumindest einem der vorhergehenden Ansprüche, **dadurch gekennzeichnet, dass** als Vulkanisationsbeschleuniger 0,25 bis 3 phr zumindest eines Sulfenimid- und/oder eines Sulfenamidbeschleunigers enthält.

13. Fahrzeugluftreifen, der eine mit Schwefel vernetzte Gummierungsmischung gemäß Anspruch 1 aufweist.

14. Fahrzeugluftreifen nach Anspruch 13, **dadurch gekennzeichnet, dass** er eine Karkassgummierung und/oder eine Gürtelgummierung aus der Gummierungsmischung aufweist.

15. Fahrzeugluftreifen nach Anspruch 13 oder 14 **dadurch gekennzeichnet, dass** er ein Nutzfahrzeugreifen ist.
